(19) **Europäisches Patentamt**

**European Patent Office**

**Office européen des brevets**

(11) **EP 1 317 151 A1**

(12) # EUROPEAN PATENT APPLICATION

(43) Date of publication:
**04.06.2003 Bulletin 2003/23**

(51) Int Cl.⁷: **H04Q 7/22**, H04L 12/56,
H04L 12/28

(21) Application number: **01310035.9**

(22) Date of filing: **30.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative:<br>**Lidbetter, Timothy Guy Edwin et al**<br>**BT Group Legal Services,**<br>**Intellectual Property Department,**<br>**8th Floor, Holborn Centre,**<br>**120 Holborn**<br>**London EC1N 2TE (GB)** |

(54) **Congestion control in a wireless network**

(57)     A method of congestion control signalling for use in a wireless network, the method comprising the steps of: transmitting data packets to one or more user terminal over a wireless communications link; and setting one or more explicit congestion notification (ECN) bits in a sub-set of the transmitted packets prior to transmission;

    wherein the proportion of transmitted packets whose ECN bit or bits is set is indicative of a congestion charge to be made for use by the or each user terminal of one or more wireless resources.

Figure 11

**Description**

Technical Field

The present invention relates to a method of congestion control signalling for use within a wireless network, and in particular to a method of congestion control signalling wherein congestion charges are signalled by setting a proportion of ECN bits in packets to be transmit to users of the network.

Background to the Invention and Prior Art

Procedures for efficient control and management of wireless network resources are becoming increasingly important. This is due to two factors: First, there is a limited ability, compared to fixed wireline networks, for increasing the capacity of mobile wireless networks. Second, emerging multimedia services and applications will increase the demand for bandwidth in wireless networks.

Congestion pricing has been identified as a flexible mechanism for efficient and robust resource control in fixed wireline networks, as discussed by F.P. Kelly in *Charging and rate control for elastic traffic,* European Transactions on Telecommunications, vol.8 pp.33-37 January 1997. Congestion pricing has also already been considered for wireless networks, and in particular in the following documents: Goodman et al. *Power control for wireless data* IEEE personal Comm. 7:48-54, April 2000; Xiao et al. *Utility-based power control in cellular wireless systems* Proc of IEEE INFOCOM'01 Anchorage AK April 2001; Liu et al, *Forward-Link CDMA resource allocation based on pricing,* IEEE Wireless Communications and Networking conference (WCNC), 2000; Ji et al, *Non-cooperative uplink power control in cellular radio systems* Acm/Baltzer Wireless Networks Journal Vol 4. pp233-240, 1998; Lu et al, *Integrating power control, error correction coding and scheduling for a CDMA downlink system* IEEE J. Select. Areas Commun. 17(5): 978-989, June 1999; Elaoud et al. *Adaptive Allocation of CDMA resources for network level QoS assurances*, ACM/IEEE International Conference on Mobile Computing and Networking (MOBICOM) pp191-199, 2000; Sampath et al, *Power control and resource management for a multimedia CDMA wireless system*, Proc of IEEE Int Symp Personal, Indoor, Mobile Radio Commun (PIMRC), Toronto, Canada, 1995; Ramakrishna et al, *A scheme for throughput maximisation in a dual class CDMA system* IEEE J. Select Areas Commun, 16(6):830-844, August 1998; Honig et al, *Allocation of DS-CDMA parameters to achieve multiple rates and qualities of service* IEEE Trans on Vehicular Technology 49(2): 506-519, March 2000; and Oh et al *Dynamic Spreading gain in multiservice CDMA networks* IEEE J. Select. Areas Commun. 17(5):918-927 May 1999.

Many of the references mentioned above use the concept of utility to optimise sending rate over a wireless link, although none consider a framework that seamlessly encompasses all network resources (wireless spectrum, base station power, mobile station battery, as well as fixed network resources), and also none consider any of the engineering to realise this. The essential distinction is between a theoretical utility function and a practical QoS buying policy to implement it.

To implement such congestion control mechanisms in a wireless network, there is a need for the ability to be able to signal the congestion charge to the mobile users. In fixed wireline networks, Explicit Congestion Notification (ECN) marking will become the standard mechanism for conveying congestion information to end-systems, as proposed in Ramakrishnan K and Floyd S *A proposal to add Explicit Congestion Notification (ECN) to IP* RFC 2481 January 1999.

Furthermore the use of ECN marking has also been proposed other purposes and in particular for improving the performance of TCP over wireless networks and for 3G wireless networks,in Montenegro et al, "Long thin networks" RFC2757 (Jan. 2000), ***http://www.ietf.org/rfc/rfc2757.txt***, Inamura et al, "TCP over 2.5G and 3G wireless networks", (Feb. 2001), ***http://search.ietf.org/internet-drafts/draft-ietf-pilc-2.5g3g-03.txt,*** and from the Uni of Bejing/Nokia, such as "A proposal to apply ECN into Wireless and Mobile Networks", Jian Ma, Fei Peng (09/17/2001), ***http://www.ietf.org/internet-drafts/draft-fpeng-ecn-04.txt***. The latter document in particular suggests distinguishing congestion from loss using explicit congestion notification (ECN) instead of packet drop.

However, the widespread use of the Internet necessitates the seamless interworking of protocols and procedures in mobile wireless networks, with those in fixed IP-based networks. One important procedure is congestion control, which in IP networks is performed mainly by TCP (Transmission Control Protocol). There is therefore a need to provide for seamless congestion control signalling, which seamlessly integrates a wireless network with that of any fixed network over which the wireless network's data traffic may also have to flow.

Summary of the Invention

In order to address the above problems, in the present invention we propose to use ECN marking as the signalling mechanism to provide congestion feedback for wireless resources. In particular the communication of the price per unit of wireless resource to the mobile user terminals is performed at the radio network controller by setting an appropriate proportion of explicit congestion notification (ECN) bits. In this way the congestion control is seamlessly integrated between the wireless and fixed networks, as the mobile users simply see the ECN marks without knowing whether the congestion present is in the wireless or the wired network.

In view of the above, from a first aspect the present invention provides a method of congestion control signalling for use in a wireless network, the method comprising the steps of: transmitting data packets to one or more user terminal over a wireless communications link; and setting one or more explicit congestion notification (ECN) bits in a sub-set of the transmitted packets prior to transmission;

wherein the proportion of transmitted packets whose ECN bit or bits is set is indicative of a congestion charge to be made for use by the or each user terminal of one or more wireless resources.

The use of the ECN bit for congestion control has recently been proposed as a standard for fixed networks (see RFC 3168 at www.ietf.org), and hence its use as a congestion signalling method for a wireless network as proposed herein allows for seamless integration of the wireless network with any fixed network to which the wireless network may be connected. Furthermore the invention allows for the ECN feedback to reflect the usage of the shared wireless resources in the wireless network, in addition to the usage of resources in the fixed network.

Preferably, the setting step further comprises the steps of monitoring the data traffic load in the wireless network; and selecting an ECN setting probability as a function of the monitored data traffic load; wherein the function is arranged such that the ECN setting probability increases as the monitored data traffic load increases. This ensures that the ECN marks set or added to the packets are indicative of the actual network loading.

Moreover, preferably a first function is used to select the ECN setting probability for ECN bits which indicate the congestion charge for use of the one or more wireless resources for the transmission of data from the one or more user terminals, and a second function is used to select the ECN setting probability for ECN bits which indicate the congestion charge for use of the one or more wireless resources for the transmission of data to the one or more user terminals. Such provision allow the uplink and downlink from/to the user terminals from a network base station to be treated separately, and respective congestion charges can be set for one direction independent of the traffic load in the other.

In a preferred embodiment, the wireless network is a CDMA network, and the first function is a function of at least the monitored data traffic load on the network, and a transmission bit-energy to noise spectral density ratio of the data transmitted from the one or more user terminals.

Furthermore, within the preferred embodiment the second function is preferably a function of at least the monitored data traffic load on the network, and a transmission power value of the data transmitted to the one or more user terminals.

Preferably, in any of the embodiments the setting of a packet's ECN bit or bits is performed by a radio network controller (RNC) provided to control the wireless network

From a second aspect the invention also provides a computer-readable storage medium storing a program which when run on a computer controls the computer to perform the method of the invention according to the first aspect substantially as described herein.

Brief Description of the Drawings

Further features and advantages of the present invention will become apparent from the following description of a number of embodiments thereof, presented by way of example only, and by reference to the accompanying drawings, wherein:

Figure 1 is a graph showing the operation of a typical CDMA system;
Figure 2(a) and (b) respectively illustrate the hardware elements which are required for the operation of the present invention;
Figure 3(a) illustrates a typical user utility function for rate-elastic traffic with no minimum rate;
Figure 3(b) illustrates a typical user utility function for rate-elastic traffic with a minimum rate;
Figure 4 illustrates a plot of the probability of a bit being received successfully over a communications link with respect to the ratio of bit-energy to noise-spectral density (Eb/No) for DPSK modulation;
Figure 5 illustrates another plot of the probability of a bit being received successfully over a communications link with respect to the ratio of bit-energy to noise-spectral density (Eb/No) for other types of modulation;
Figure 6 illustrates a further plot of the probability of a bit being received successfully over a communications link with respect to the ratio of bit-energy to noise-spectral density (Eb/No) for further types of modulation;
Figure 7 is a graph of a price versus load function which may be used in the present invention;
Figure 8 illustrates the control signalling flows in the preferred embodiment of the present invention;
Figure 9 is a flow diagram showing the steps required for control of an uplink in the preferred embodiment of the present invention;
Figure 10 is a flow diagram showing the steps required for control of a downlink in the preferred embodiment of the present invention;
Figure 11 illustrates the flow of ECN marks used in the preferred embodiment of the present invention;
Figure 12 shows how the ECN marks can be seamlessly integrated to provide a congestion control loop;
Figure 13 is a flow diagram showing the steps required for control of an uplink in another of the present invention;
Figure 14 is a flow diagram showing the steps required for control of a downlink in another of the present invention;

## Background of the Preferred Embodiments

Congestion pricing has been identified as a flexible mechanism for efficient and robust resource control in fixed wireline networks, and the embodiments of the invention provide various congestion pricing control scheme for use in wireless WCDMA (Wideband Code Division Multple Access, CDMA) networks. It should be noted that the embodiments to be described describe substantially whole congestion control schemes, of which the present invention relating specifically to congestion price signalling forms but a part.

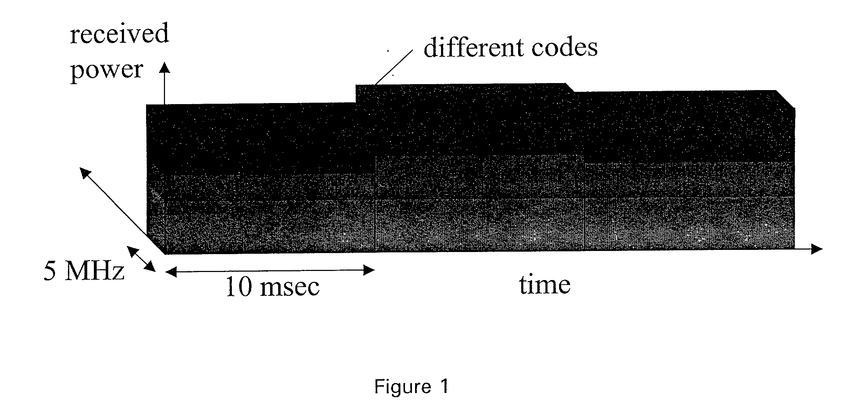

WCDMA has emerged as the most widely adopted third generation (3G) air interface technology. With FDMA (Frequency Division Multiple Access) each mobile uses a difference portion of the radio spectrum, and with TDMA (Time Division Multiple Access) each mobile can use the shared radio resource only in the time slots it has been allocated. On the other hand, with CDMA all mobile hosts can simultaneously use the whole radio spectrum, and unique digital codes are used to differentiate the signal from different mobiles; such an approach enables simpler statistical multiplexing, without the need for complex time or frequency scheduling mechanisms. WCDMA is based on Direct Sequence CDMA (DS-CDMA), a spread spectrum technology where the user data bits are spread over the entire spectrum used for transmission. The concept of WCDMA is shown in Figure 1, wherein it will be seen that the use of different spreading codes allows a user to transmit across the entire available bandwidth, (which for WCDMA is approximately 5 MHz in each direction (this is the case for WCDMA's Frequency Division Duplex (FDD) mode - in the Time Division Duplex (TDD) mode it uses a single 5 MHz band for both directions (uplink and downlink))) but it is only by application of the appropriate de-spreading code at the receiver that the original spread signal is received. The operating concepts of DS-CDMA are well known in the art, and no further details need be given herein.

An important advantage of WCDMA, however, is the support for variable bit rates, that is achieved with the use of variable spreading factors and multiple codes. Finally, all the cells in a WCDMA network use the same frequency spectrum; this feature is behind the soft-capacity property of WCDMA networks, which results in the graceful degradation of performance as the load increases.

Note that although the embodiments of the present invention are focused on WCDMA, including its code and time division scheduling modes, our results and the present invention are more generally applicable to both CDMA-based and other wireless systems.

Prior to describing the operation of the embodiments of the invention, a discussion of the theoretical background of the invention in the context of a CDMA network will first be undertaken.

## Theoretical Background

In this section we investigate resource usage for the uplink and downlink in CDMA networks, identifying the key parameters that affect resource usage in each direction. The investigations into resource usage thus obtained is then applied within the specific emdodiment of the present invention.

Consider a single CDMA cell. Let W be the chip rate, which is fixed and equal to 3.84 cps for WCDMA. The bit-energy-to-noise-density ratio, (a note regarding terminology: The term signal-to-interference-plus-noise (or simply signal-to-interference) ratio SINR (or SIR) is sometimes used for what we defined as $E_b/N_0$; however, this is not universal, since SINR can also be taken to be (r/w * Eb/No) , i.e., the carrier signal to interference ratio. $E\_b/N\_0$ , at a receiver (either the mobile host or the base station)) is given, in the case of matched filter receivers, by:

$$\left(\frac{Eb}{No}\right)_i = \frac{W}{r_i} \frac{g_i p_i}{I_i + \eta_i} \qquad (1)$$

where $r\_i$ is the transmission rate, $p\_i$ is the transmission power, $g\_i$ is the path gain between the base station and mobile i , $I\_i$ is the power of the interference, and eta_i is the power of the background noise. The path gain depends on channel imperfections such as attenuation, shadowing, and multipath fading.

The value of the bit-energy-to-noise-density ratio $(E\_b/N\_0)\_i$ corresponds to the signal quality, since it determines the bit error rate (BER). Due to the errors in the wireless network, the actual throughput, i.e., rate of successful data delivery, will be smaller than $r_i$. Under the realistic assumption of additive white Gaussian noise, BER is a non-decreasing function of $E\_b/N\_0$ that depends on the multipath characteristics, and the modulation and forward error correction (FEC) algorithms. Let gamma_i be the target bit-energy-to-noise-density ratio required to achieve a target (the target signal quality can also be expressed in terms of the block error rate, BLER , or the frame error rate, FER . In practise up to now, the target signal quality is set the same for all users. Nevertheless, it has been identified that differentiated service can be offered by setting a different target for different users. This target is given to fast closed-loop power control (WCDMA supports fast (1500 Hz) closed-loop power control in both the uplink and the downlink. On the other hand, IS-95, a second generation narrowband CDMA system, supports fast (800 Hz) closed-loop power control only in the uplink), which adjusts the transmission power in order to achieve it. If we assume perfect power control, then $(E\_b/N\_0)\_i$ = gamma_i.

The ratio $W/r\_i$ is the spreading factor or processing gain for mobile i . From (1) we observe that for a higher spreading factor, equivalently a smaller transmission rate, the same target $E\_b/N\_0$ will be achieved with less power. Variable bit rate transmission can be supported with codes corresponding to different spreading factors, while keeping the chip rate the same, and with the use of multiple codes. In WCDMA transmission occurs in frames with a minimum duration of 10 milliseconds; the rate is allowed to change between frames, but remains the same within a single frame.

The spreading factor on the uplink dedicated channel are powers of 2 and can range from 256, giving a channel bit rate (Note: The maximum user data rate with 1/2 rate coding is approximately half the channel bit rate) of 15 Kbps , to 4, giving a channel bit rate of 960 Kbps ; higher bit rates are achieved by using up to 6 parallel codes with spreading factor 4 (giving a channel bit rate of 5740 Kbps ). In the downlink, the spreading factor can range from 512 to 4. Moreover, in the downlink, orthogonal codes are selected according to the maximum transmission rate.

When a sender does not send data continuously, the average $E\_b/N\_0$ requirements will be met, if the right hand-side of (1) is multiplied by the percentage of time the sender is "on", i.e., actually transmitting data; this percentage is called activity factor, and for voice is 0.67 .

Uplink

In the uplink, the interference $I\_i$ for mobile i is the sum of the power of the signals received by the base station from all other mobile hosts within the same cell, i.e., $I_i = \Sigma_{j \neq i} g_j p_j$. Moreover, we can assume that the background noise at the base station is the same for all mobiles, i.e., eta i = eta . If gamma_i is the target bit-energy-to-noise-density ratio, then under perfect power control $(E\_b/N\_O)\_i$ = gamma_i, and (1) becomes (2):

$$\gamma_i = \frac{W}{r_i} \frac{g_i p_i}{\sum_{j \neq i} g_j p_j + \eta}$$

Solving the set of equations given by (2) for each mobile i , we get

$$g_i p_i = \frac{\eta \alpha_i^{UL}}{1 - \sum_j \alpha_j^{UL}} \qquad (3)$$

where the load factor is given by:

$$\alpha_i^{UL} = \frac{1}{\left( \dfrac{W}{r_i \gamma_i} + 1 \right)} \qquad (4)$$

Note that the power levels given by the set of equations (3) for i is a member of I , where I is the set of mobiles, are the minimum such that the target bit-energy-to-noise-density ratios gamma_i are met. Since the power $p\_i$ can take only positive values, from (3) we get:

$$\sum \alpha_i^{UL} \langle 1 \qquad\qquad (5)$$

The sum in ( 5) is called uplink load factor. Moreover, ( 5) illustrates that the uplink is *interference-limited:* Even when they have no power constraints, mobile hosts can not increase their power with no bound, due to the increased interference they cause to the other mobiles. If (5) is violated, then the target gamma_i can not be met for all mobiles, and the system is infeasible.

Moreover, (5) suggests that the load factor is a measure of the resource usage or the "effective usage" of a mobile host i , in the uplink direction. Observe from (4) that resource usage in CDMA networks is determined by two parameters, which can be controlled independently: the transmission rate r_i and the signal quality, expressed in terms of the target bit-energy-to-noise-density ratio gamma_i; moreover, resource usage is an increasing function of the product of r_i and gamma_i . The above result was for the case of linear single user (matched filter) receivers; expressions for resource usage can also be defined for multiuser receivers.

A useful expression for measuring the uplink load factor can be found by summing (3) for all mobiles:

$$\sum_i \alpha_i^{UL} = \frac{I_{TOTAL} - \eta}{I_{TOTAL}} \qquad\qquad (6)$$

where I_total is the total received power, including the noise power. Hence, estimation of the uplink load factor requires measurements of the total interference and the noise, both of which can be performed at the base station.

When there are a large number of mobile users, each using a small portion of the available resources, we have $\frac{W}{r_i\gamma_i} \gg 1$, hence $\alpha_i^{UL} \approx \frac{r_i\gamma_i}{W}$ and the resource constraint (5) can be approximated by:-

$$\sum_i r_i\gamma_i \langle W \qquad\qquad (7)$$

Up to now we have assumed that there are no constraints on the power a mobile can transmit. In the case there are such power constraints, namely p_i for mobile i , then from (3) we get :-

$$\sum_i \alpha_i^{UL} \leq 1 - \frac{\eta}{\min_i \left[ \dfrac{g_i p_i}{\alpha_i^{UL}} \right]} \qquad\qquad (8)$$

Hence, when there are power constraints, the total capacity is determined by one mobile host. Indeed, if all mobiles have the same power constraint and the same resource usage, then the total capacity is determined by the mobile with the smallest channel gain g_i, equivalently the highest channel loss. Since loss is related to the distance from the base station, the uplink in this case is coverage-limited. Hence, from the above we see that the coverage of a CDMA cell is determined by the constraint on the uplink load factor: a smaller constraint results in a larger coverage. In radio network planning this constraint is expressed in terms of the interference margin or noise rise, I_margin, which is given by the ratio of the total received power (including the noise) divided by the noise power:

$$I_{m\,arg\,in} = \frac{I_{total}}{\eta},$$

in which case the constraint on the total load becomes

$$\sum_i \alpha_i^{UL} \le \frac{I_{m\,arg\,in} - 1}{I_{m\,arg\,in}}$$

The above model can be extended to the case where we have two (or more) traffic classes, e.g., real-time and non real-time, for which there is a bound on the percentage of the capacity used by one class (e.g., non real-time) or the total power of the signals received at the base station from one traffic class, thus limiting the interference that this class causes to the other (e.g.,real-time).

Downlink

In the downlink, the total interference for mobile i is given by $I_i = \theta_i g_i \Sigma_{j \ne i} p_j$, where theta_i represents the orthogonality of the codes used in the downlink (WCDMA employs orthogonal codes in the downlink. Due to multipath propagation, however, the mobile will receive part of the base station signal as multiaccess interference. On the other hand, multipath propagation can increase the power of the received signal. Which of the two effect is larger depends on the distance of the mobile from the base station, and its speed. In the uplink, transmission is asynchronous, hence the signals are not orthogonal), g_i is the channel gain from the base station to mobile i , and p_j is the transmission power to mobile j . If gamma_i is the target signal quality for mobile i , and assuming, as in the previous sections, that we have perfect power control, then (1) becomes:

$$\gamma_i = \frac{W}{r_i} \frac{g_i p_i}{\theta_i g_i \sum_{j \ne i} p_j + \eta}$$

$$\dots (9)$$

The orthogonality factor theta_i depends on multipath effects, hence can be different for different mobile hosts. Typical values fall in the range [0.1,0.6].

In the downlink, unlike the uplink, there is a limit on the total transmission power (here the total transmission power here refers to the total power the base station can transmit minus the power used for the downlink control channels), say P, hence the downlink is power-limited. The corresponding resource constraint is given by:

$$\sum_i p_i \le P \qquad (10)$$

The last equation suggests that the transmission power from the base station characterizes resource usage in the downlink direction.

Next we derive the expression for the total power constraint in terms of r_i, gamma_i . From (9) we get:

$$p_i = \alpha_i \sum_j p_j + \alpha_i \eta_i' \qquad (11)$$

where we have substituted

$$\eta'_i = \frac{\eta_i}{\theta_i g_i}$$

and

$$\alpha_i = \frac{1}{\dfrac{W}{r_i \gamma_i \theta_i} + 1}.$$

Summing (11) for all mobiles gives:

$$\sum_i p_i = \frac{\sum_i (\alpha_i \eta'_i)}{1 - \sum_i \alpha_i} \qquad (12)$$

Observe in the last equation that as the sum of alpha_i approaches 1, the total power required at the base station tends to infinity.

From (10) and (12) we have:

$$\sum_i \left[ \alpha_i \left( \frac{\eta'_i}{P} + 1 \right) \right] \le 1 \qquad (13)$$

Equation (13) suggests that resource usage in the downlink direction can be expressed in terms of the rate r_i and target bit-energy-to-noise-density ratio gamma_i by:

$$\alpha_i^{DL} = \alpha_i \left( \frac{\eta'_i}{P} + 1 \right) = \frac{\dfrac{\eta_i}{\theta_i g_i P} + 1}{\dfrac{W}{r_i \gamma_i \theta_i} + 1} \qquad (14)$$

Unlike the uplink, where resource usage is given by (4), resource usage in the downlink is not independent of the path gain, hence of the mobile's position.

Description of the embodiments

Having described the theoretical background to the present invention, a number of preferred embodiments thereof will now be described which build thereon.

The embodiments of the invention are aimed at allowing for efficient allocation of scarce wireless resources such as transmission bandwidth (transmission rate), bit energy, transmission power, battery power and the like, by the application of micro-economic principles of supply and demand. The invention itself is concerned with seamless control signalling for use in such embodiments, and which has practical advantages for the seamless interworking of different types of network.

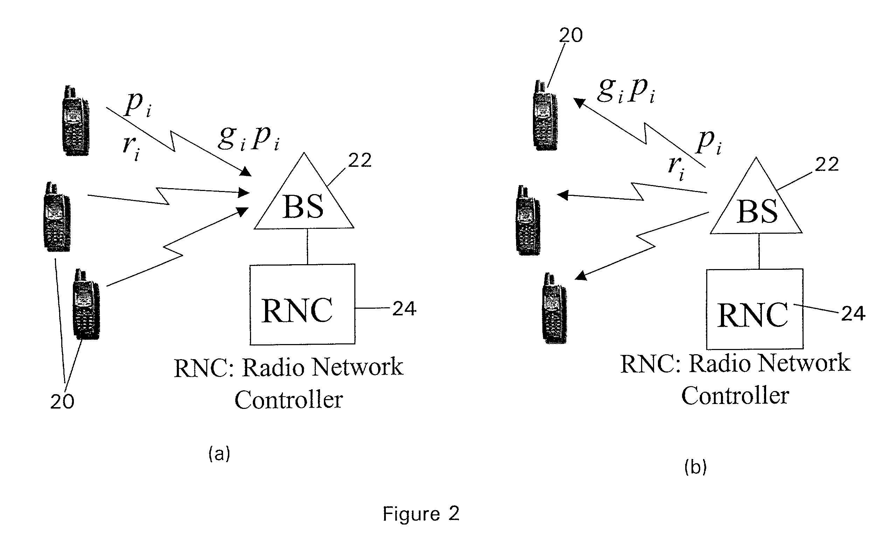

Whilst a detailed description of each embodiment of the invention will be undertaken later, the operation of the embodiments of the invention can be summarised as follows with reference to Figure 2(a) and (b) and Figure 7 and 8.

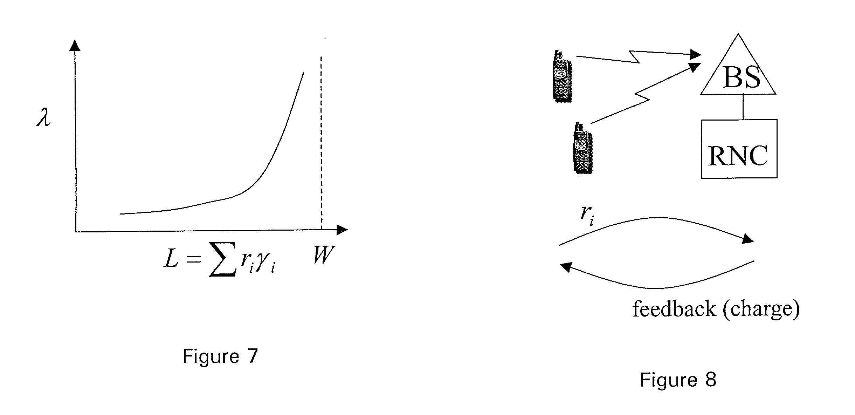

Each mobile handset 20 contains a computer readable storage medium such as a solid state memory which stores a user utility function which expresses a user utility value U for the handset as a function of one or more scarce wireless resources, and the price per unit of using those wireless resources. Based on the presently monitored network loading, a radio network controller (RNC) 24 which controls the wireless network (which itself consists of one or more base stations 22 which physically communicate with the mobile handsets 20 via radio links) sets a price for the use by the mobile handsets of the wireless network's actual physical resources, and this is communicated to each of the mobile handsets 20 by the setting of an appropriate proportion of ECN bits is data packets being transmitted to the one or more user terminals. The price setting may be performed using a function of price against network loading as shown in Figure 7. Using this information each mobile handset then calculates its own rate of wireless network resource usage based on its own user utility function such that the utility value U for the handset is maximised.

In the case of an uplink to the network as shown in Figure 2(a), the handset then transmits at a rate and with a transmission power such that the wireless resources are used at the calculated rate, and the radio network controller charges the handset by the product of the announced price and the wireless resource usage rate.

In the case of a downlink from the network to a handset as shown in Figure 2(b) the handset must first signal its calculated rate of wireless resource usage to the network, as shown in Figure 8, which then transmits to the handset at a transmission rate and with a transmission power to use the scarce wireless resources at the signalled rate, and again the RNC charges the handset with the product of the announced price and the wireless resource usage rate.

In either case, the RNC periodically monitors the present network load and signals changes in price of each wireless resource as appropriate, whereupon the handsets can then re-calculate their resource usage rates and signal or transmit load data as appropriate.

It will be apparent from the above that the key to the operation of a congestion-based resource control scheme is the definition and maximisation of the user utility function which gives the user utility value U. We have found that for CDMA wireless networks no single user utility function is optimal for both up and down links, nor for different types of traffic. In particular, in the embodiments of the invention to be described next we use a different optimal user utility function for each of the up and down links for both rate-elastic and for rate-inelastic traffic.

Rate elastic traffic

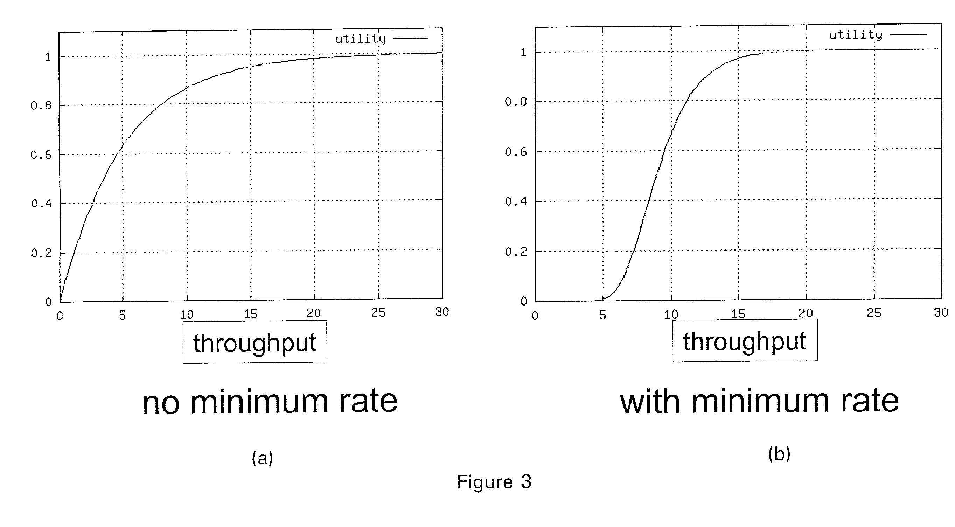

In the case of elastic (best-effort) traffic, users value the average throughput with which their data is successfully transmitted. The throughput is a product of the transmission rate and the probability of successful packet transmission. The latter is a function of the bit error rate BER , which as discussed in the theoretical background is a function of the target bit-energy-to-noise-density ratio gamma . Hence, the probability of successful packet (Packet here refers to the data unit over which error detection is performed) transmission can be written as Ps(gamma) , in which case the average throughput is rPs(gamma). Thus, the utility for elastic traffic has the form U(rPs(gamma)). If the mobile user does not have minimum rate requirements, then the utility is typically concave, as shown in Figure 3(a).

On the other hand, in the case the user has minimum rate requirements, equivalently maximum delay requirements, the utility can have a sigmoid shape, as shown in Figure 3(b).

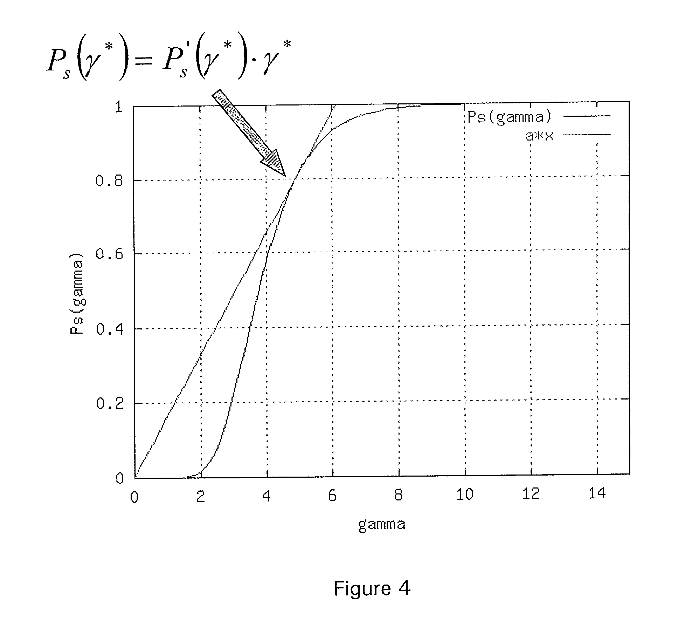

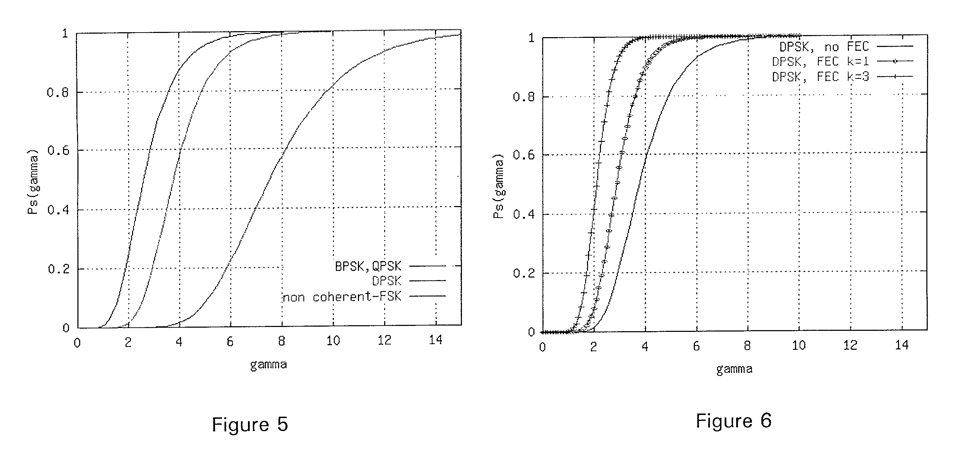

Note that the packet success probability Ps(gamma) , in addition to the modulation and error correction algorithms, depends on a path's multipath characteristics, hence can be different for different mobiles. Figure 4 illustrates a plot of Ps(gamma) against gamma for DPSK modulation, whereas Figures 5 and 6 illustrate Ps(gamma) for other forms of modulation.

In the first embodiment, let c( r_i, gamma_i, p_i) be the charge incurred by user i with rate r_i , target bit-energy-to-noise-density ratio gamma_i , and transmission power p_i . The net utility maximization problem for the user then has the following general form (unless otherwise noted, we assume that the packet success probability Ps(gamma) is the same for all users):

$$\text{maximise } U_i(r_i P_s(\gamma_i)) - c(r_i, \gamma_i, p_i) \tag{15}$$

over r_i > = 0, gamma_i > =0
where the variables r_i, gamma_i, p_i are related by (2) and (9)

The charge c( r_i, gamma_i, p_i) can include both the congestion charge for shared resources in the wireless network and, as we will see later, the congestion charge for resources in the wireline network and the cost of battery power at the mobile (in the uplink direction). Specific formulations for the uplink and downlink utilty function, based on the results of the theoretical background regarding resource usage in each direction, will be discussed later.

The optimization in (15) involves two parameters: the rate r_i and the target bit-energy-to-noise-density ratio gamma_i . We have found that an important result for the uplink, but which also holds for more general forms of the charge function c(), is that the user optimization can be decomposed into two subproblems: one involving the selection of the optimal gamma , which depends only on the packet success probability Ps(gamma), and one involving the selection of the optimal rate r , which depends on the user's utility and his charge.

Note that it is mathematically equivalent to perform the optimization of (15) over any of the variables r_i, gamma_i, and p_i . In WCDMA networks, however, due to multipath fading and mobility, the power to achieve a target bit-energy-to-noise-density ratio can vary significantly. Fast closed-loop power control between the base station and the mobile adjusts the transmission power to achieve the target gamma_i . In this embodiment we assume that the adaptation of the rate and signal quality occurs at a slower timescale compared to fast closed-loop power control.

We will consider now the utility function for the uplink for rate inelastic traffic. In the uplink from (7) previously we found that the wireless resource constraint was a function of the product of the transmission rate r_i for a particular mobile handset, and the transmission bit energy to noise spectral density ratio gamma_i. Therefore in order to provide the right incentives for efficient usage of network resources, user i's charge should be proportional to his resource usage, which is given by the product r_i * gamma_i. Hence, in the uplink the user optimisation problem becomes:

$$\text{maximise } U_i(r_i P_s(\gamma_i))\text{-}\lambda r_i\gamma_i \tag{16}$$

over r_i > = 0, gamma_i > =0

where lambda is the shadow price for resource r_i gamma_i .

For simplicity, we assume that the packet success rate function Ps(gamma) is the same for all users.

The network can adjust the price lambda based on measurements of load. If the price is adjusted up (or down) depending on whether the demand is larger (or less) than the available capacity, then the social welfare of the system (mobile users and wireless network), take to be the sum of all user utilities, is maximized.

Note that in the above model prices do not depend on the position of the mobile. This is because the uplink is interference-limited, and interference depends on the received power of the signal at the base station. On the other hand, with the approaches in the prior art where charges depend on the transmitted power, mobile users that are far from the base station incur a higher charge, for the same rate and signal quality, compared to users that are close to the base station. Moreover, in the downlink, as we will see later, a mobile user's position influences his charge, since resource usage in this case is determined by the transmitted power at the base station.

The problem, then, in the uplink is for a user to find the rate of resource usage of r_i, gamma_i, which maximises (16). Importantly, we have found that an important property which greatly simplifies the application of (16) is that the optimal gamma^*_i of the target bit-energy-to-noise-density ratio is independent of the price lambda and of the user's utility. This allows the decoupling of the two problems of selecting the optimal gamma^*_i and of adjusting the transmission rate r_i.

More particularly, it can be shown that the optimal value of gamma_i (gamma^*_i) satisfies the following:

$$Ps(gamma^*\_i) = Ps'(gamma^ *\_i)gamma^ *\_i \tag{17}$$

Furthermore, when this condition is met the number of bits successfully received per unit of received energy is maximised. The solution can be solved for mathematically, and also graphically, being the value of gamma at which a straight line passing through the origin is at a tangent to a plot of Ps(gamma). This is shown graphically in Figure 4.

Thus, by being able to find the optimal value of gamma_i (gamma^ *_i) solely from Ps(gamma_i) the user utility problem for the uplink is reduced to :

$$\text{maximise } U_i(r_i P_s(\gamma_i^*))\text{-}\lambda r_i\gamma_i^* \tag{18}$$

over r_i > = 0

In view of the above findings, the method steps for resource control for the uplink in the first embodiment are as shown in Figure 7, and described next.

Firstly, at step 9.1 the RNC 24 selects the optimal gamma ^ *_i which satisfies (17) above. In WCDMA, the procedure for selecting gamma (target E_b/N_O ) is performed at the RNC, during outer loop power control: The BS measures the bit error rate BER (or the frame error rate FER ), and sends the measurement to the RNC, which adjusts gamma to achieve a target BER ; gamma is then used as the target for fast closed-loop power control, which operates between the base station and the mobiles. Hence, it is appropriate to perform the selection of the optimal gamma^ * in Step 9.1 at the RNC, effectively replacing the normal outer loop power control procedure.

A sample algorithm for setting gamma^* , which takes into account the sigmoid shape of the packet success probability, is as follows:-

WHILE TRUE

$$IF \frac{Ps(k) - Ps(k-1)}{Step} > F\_high \frac{Ps(k)}{Gamma}$$

$$Gamma+ = Step$$

$$IF \frac{Ps(k) - Ps(k-1)}{Step} < F\_low \frac{Ps(k)}{Gamma}$$

$$Gamma- = Step$$

where

Ps(k): packet success rate at step k
Gamma : target Eb/N0
Step: target Eb/N0 update step
F_high, F_low: parameters (e.g. 1.1,0.9)

Also, note that the selection of gamma^ * can take place at the beginning of data transmission, or whenever the dependence of the packet success probability on gamma changes, e.g., when the multipath characteristics change. The alternative to the above is to perform the selection of gamma^* at the mobile host; such an approach, however, does not have apparent advantages and would result in higher signalling overhead, since measurements of BER would need to be sent to the mobile host, and in increased complexity of the mobile host.

Moreover, it is easier for the RNC to perform this task, since it can compute the packet success rate from the data received by the mobile host, assuming perfect error detection. On the other hand, if the mobile performs the selection, it would have to receive this information from the BS or, more simpler, use information regarding the packet success rate on the downlink, which is available to it, and assume that the packet success rate in the uplink is the same as that in the downlink.

As noted above, gamma^* is used as the target for fast closed-loop power control between the base station and the mobile; this power control loop operates on a much faster timescale compared to the timescale over which the transmission rate is adjusted. Indeed, in WCDMA fast closed-loop power control (in WCDMA, fast closed-loop power control, which operates at the physical layer, is supported on dedicated channels and shared channels in both the uplink and the downlink, and on the uplink common packet channel) operates at a frequency of 1500 Hz, resulting in one power update approximately every 0.67 milliseconds. On the other hand, the rate remains constant within a single frame, whose minimum duration is 10 milliseconds. Hence, the rate control procedure described above works on top of fast closed-loop power control.

Also note that, according to (2) a change in the transmission rate would require adjusting the transmission power in order to maintain the same gamma^ * .

Following step 9.1, at step 9.2 the RNC monitors the load on the network. This can be achieved using direct application of the sum of the load factors given by (4), or by measurements of the total interference power Itotal (which includes noise), and the noise power eta. This is discussed in more detail later.

At step 9.3, the RNC sets the price lambda based on the load. This can be performed using a predefined price-load function as shown in Figure 7.

At step 9.4, the RNC signals the set price to the mobile handsets. This is preferably performed using the setting of an explicit congestion notification bit on packets sent to each mobile, as will be described later, but may also be performed using a dedicated signalling channel.

At step 9.5, following the receipt of the price lambda, each mobile handset finds its optimum transmission rate r_i such that its own user utility value U is maximised using (18). Regarding the selection of optimal r^*_i, recall that the spreading factor can obtain discrete values, ranging from 4 to 256 (512 in the downlink) in powers of 2, hence the transmission rate can obtain discrete values.

At step 9.6, each mobile handset transmits at its calculated rate r_i, and at step 9.7 the RNC charges the MH by the product of the announced price lambda and the rate of resource usage r_i*gamma^*_i. In Step 9.6, charges are proportion to the product r_i gamma_i . The BS/RNC, assuming perfect error detection, can compute the transmission rate r_i . (Note that r_i is the transmission rate, which due to errors in the wireless network, is different from the actual throughput or rate of successfully transmitted data.) Also, the BS/RNC knows gamma_i , since it has computed it (or has received it from the mobile); falsely declaring the latter will reduce a user's charge, in addition to decreasing his resource usage. Hence, there is no parameter that the mobile user can falsely declare in order to reduce his charge, without reducing his level of service.

Following step 9.7, processing returns to step 9.2 for monitoring of the network load and subsequent setting of the price. This involves adjusting the price lambda based on some estimate of the level of congestion of wireless network resources. The specific procedure for adjusting the price is related to how prices are communicated to the mobile user uses ECN marking and this will be discussed in more detail later.

In the case of explicit price announcement, the price function is of the form $\lambda(\rho):[0,1]\rightarrow[0,\infty]$. One possible price function is the following:

$$\lambda(\rho)=\frac{\emptyset}{1-\rho}$$

where phi can be adjusted to achieve a target utilization, if a rough estimate of the demand is known.

Another alternative is to have the price adjusted in fixed time intervals k , according to $\lambda(k+1)=\lambda(k)+\kappa(\lambda(k))$ $(\rho-\rho_{t\,arg\,et})$ where rho_target < 1 , and kappa( lambda(k)) determines the magnitude of the price change in each update.

Both of the above two alternatives require measurements of the total load rho . One approach for measuring the total load is to use measurements of the total interference power I_{total} (which includes the noise), and the noise power eta , from which the total load can be estimated using:

$$\sum_{j} \alpha_{j}^{UL} \leq \frac{I_{total} - \eta}{I_{total}}$$

Advantages of the above are that only aggregate power measurements performed at the base station, are required and CDMA's soft capacity property is implicitly handled. Moreover, current standards provide support for communicating measurements of the total interference and noise between the base station and the radio network controller.

Next the downlink utility function for rate elastic traffic in the first embodiment is described.

The capacity constraint in the downlink is in terms of the maximum power P that the base station can transmit (see (10) previously), and hence an incentive compatible pricing scheme would be for the network to charge the mobile users in proportion to the power p_i used to transmit to each user. In this case, the user optimization problem becomes:

$$\text{maximise } U_i(r_iP_s(\gamma_i))\text{-}\lambda p_i \tag{19}$$

over r_i > = 0, gamma_i > =0

where lambda is the price per unit of power, and the variables

r_i, gamma_i , and p_i are related through (9) where I_i is the interference experienced at mobile i , due to signals destined to other mobiles.

In the above model, mobile users that are far from the base station incur a higher charge, for the same rate r and target bit-energy-to-noise-density ratio gamma . As a result, users far from the base station will send at a lower transmission rate. This results in more efficient utilization of the power at the base station, since it leads to higher aggregate utility.

Note that direct use of the congestion charge in (19) to actually charge mobile users might have disadvantages, since it is an additional source for variability of prices (recall that prices are dynamic, since they depend on the level of congestion).

Rather than the power constraint (19) in an alternative embodiment one can consider the constraint (18) which is used in the uplink for the user utility value for the downlink In this case, a user is charged based on the product r_i gamma_i, hence the user problem is:

$$\text{maximise } U_i(r_iP_s(\gamma_i))\text{-}\lambda r_i\gamma_i \qquad\qquad (20)$$

over r_i > = 0, gamma_i > =0

where again, the optimal value of gamma_i (gamma^*_i) can be found from (17).

By using (20) in the downlink, in the alternative embodiment a user's charge depends only on the performance he experiences, in terms of the transmission rate and signal quality, and is independent of his position.

There is also another reason for preferring (20) compared to (19): closed-loop power control in the downlink has the objective of achieving a specific QoS, in terms of a target E_b/N_0 . Adjustment of power based on (19) would replace the usual downlink closed-loop power control, and if it operates on a slow timescale, would result in varying QoS, in terms of received E_b/N_0 , due to fast fading (Rayleigh fading). On the other hand, fast timescale rate control is not supported by current standards.

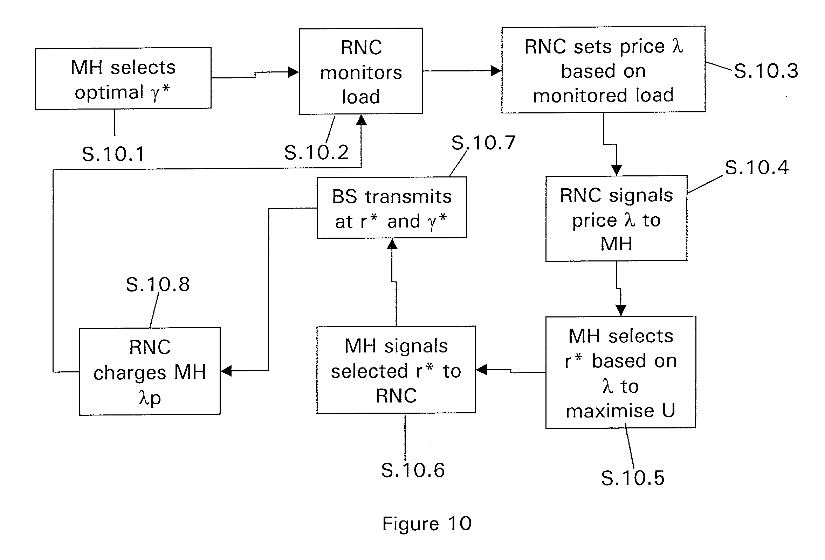

The procedure for implementing resource control for the downlink assuming explicit communication of prices from the RNC to mobile hosts, is shown in Figure 10.

At step 10.1 each MH i selects its target gamma_i^* based on (17). As in the uplink, the optimal Eb/No can be found graphically or mathematically, from the probability of a bit being received successfully function (which itself depends on the modulation technique).

At step 10.2, the RNC monitors the load on the network. In the downlink, the total load is based on measurements of total transmitted power:

$$\rho = \frac{\sum_i \tilde{p}_i}{\tilde{p}}$$

where tilde{p}_i is the average power of the signal transmitted to mobile i .

At step 10.3 the RNC sets the price lambda per unit of power based on the monitored load. The setting of the price can be performed using a price/resource function such as is shown in Figure 7. In the alternative embodiment where the user function is given by (20), the price is set for the same unit of wireless resource as in the uplink.

At Step 10.4, the RNC signals the set price to the mobile handsets. This signalling is performed in the same manner as for the uplink, and further details of a preferred embodiment which makes use of packet ECN bits are given later.

At step 10.5, each mobile uses the signalled price as an input to its user utilty function, and finds the transmission rate r_i which maximises the utility value U. When using (19) as the utility function, this step requires that the MH has some estimate of the average values for the path gain g_i , the interference I_i , and the noise eta_i . The latter two can be measured at the mobile host, whereas the path gain can be estimated using the received power of pilot bits in the downlink.

At step 10.6, each mobile signals its chosen r_i to the RNC, to inform the network of the data rate at which it should transmit to the mobile over the downlink.

At step 10.7, the network (more precisely the base station in contact with the particular mobile) transmits at the signalled transmission rate and with the optimal bit-energy, and at step 10.8 the RNC charges the mobile handset with the product of the announced price lambda and the rate of wireless resource usage (preferably power, but in the alternative embodiment r_i * gamma_i)

Following step 10.7 processing returns to step 10.2 for monitoring of the traffic load, and subsequent setting of the price. The procedure then loops around again as described above whilst the link remains in operation.

The above describes a first embodiment which provides resource control dependent upon meaningful physical properties in the form of scarce wireless resources for both the up and down links. In the embodiments to be described next, the user utility function for the uplink is extended to take into account other factors.

More particularly, in a second embodiment, it is possible to modify the user utility function to take include the cost of mobile handset battery power.

The cost of battery power can be included by adding an appropriate term to (18). For example, if the battery cost is linear to the power, we have:

$$\text{maximise } U_i(r_iP_s(\gamma_i^*))\text{-}\lambda r_i\gamma_i ^*\text{-}v_ip_i \qquad\qquad (21)$$

over r_i > = 0

where p_i is the transmitted power and nu_i is the cost per unit of battery power. The optimal value of gamma_i is found as before using (17).

Observe that the price per unit of battery power may be different for different users; this is motivated both by technological consideration, e.g., different mobiles might have different power supply capacities, and by user related constraints, e.g., depending on their location, different users might have a different ability to recharge their mobile's battery.

Within the second embodiment, the method steps to perform resource allocation are the same as for the first embodiment, with the difference that (21) is used as the user utility function for the uplink.

In a third embodiment the congestion cost for a fixed network to which the wireless network is connected can be taken into account, again by modifying thr user utility function for the uplink as follows:

$$\text{maximise } U_i(r_i P_s(\gamma_i^*))-\lambda r_i\gamma_i^*-\mu r_i P_s(\gamma_i^*) \tag{22}$$

over r_i > = 0

where mu is the price per unit of bandwidth in the fixed network. Observe that the congestion charge for the fixed network is proportional to the rate of successful data transfer over the wireless network, which is given by r_i Ps (gamma) .

As with the second embodiment, within the third embodiment the method steps to perform resource allocation are the same as for the first embodiment, with the difference that (22) is used as the user utility function for the uplink.

Rate-Inelastic Traffic

In a fourth embodiment we consider rate-inelastic traffic, which has minimum rate requirements, but can adapt its target bit-energy-to-noise-density ratio. Such applications include, e.g., streaming video/audio, which can have a fixed transmission rate, but whose quality, as perceived by users, depends on the frame error rate; the latter depends on the signal quality, which is determined by the target bit-energy-to-noise-density ratio.

A possible expression for the utility of rate-inelastic traffic is:

$$U_{in}(r,\gamma)=U_r(r)U_q(\gamma)$$

where Ur(r) , due to the inelasticity in terms of the rate, is a step function and Uq(gamma) can be an increasing concave or a sigmoid function, as for rate elastic traffic; a utility with a sigmoid shape is able to capture minimum requirements in terms of gamma , and can be justified by the shape of the packet success rate as a function of gamma (see Figure 4).

In the uplink, as discussed previously for rate-elastic traffic, the congestion charge for user i is proportional to the product r_i gamma_i , hence the user problem involves the following maximization of the following function:

$$U_{q,i}(\gamma_i)-\lambda r_{\min,i}\gamma_i \tag{23}$$

over gamma_i > = 0

The optimal gamma^ *_i for achieving the maximum in (23) satisfies:

$$U'_{q.i}=\lambda r_{\min,i} \tag{24}$$

In the downlink, as discussed in the first embodiment with respect to elastic traffuic charges are proportion to the transmission power. Hence, the user objective is to maximize the expression:

$$U_{q,i}(\gamma_i)-\lambda p_i \tag{25}$$

where r_i, gamma_i , and p_i are related through (9).

The above optimization can be performed over the target bit-energy-to-noise-density ratio gamma_i ; such an approach would require some estimates of the average value for the path gain, the interference, and the noise, which together with the rate $r_{\min,i}$ and signal quality gamma_i determine the average power, hence the average charge. The value gamma^*_i that maximizes the net utility is then handed to fast closed-loop power control, which adjusts the power in order to achieve this target.

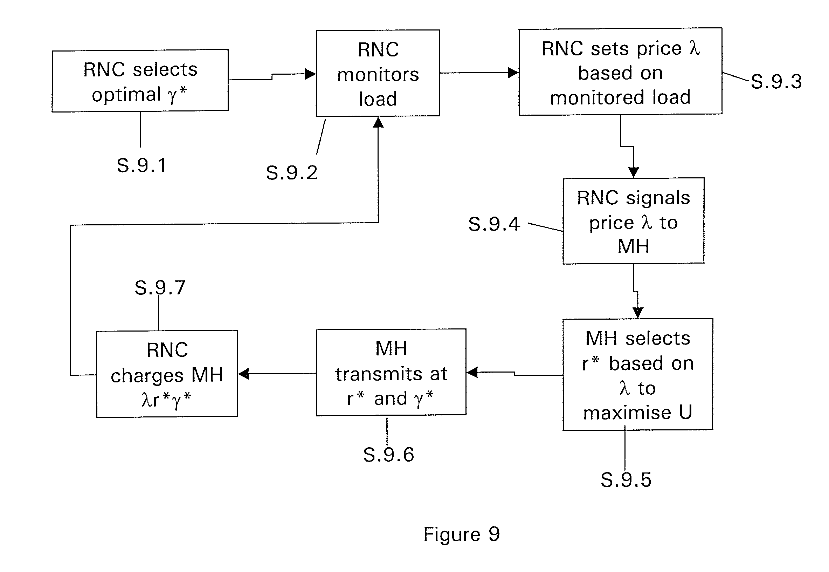

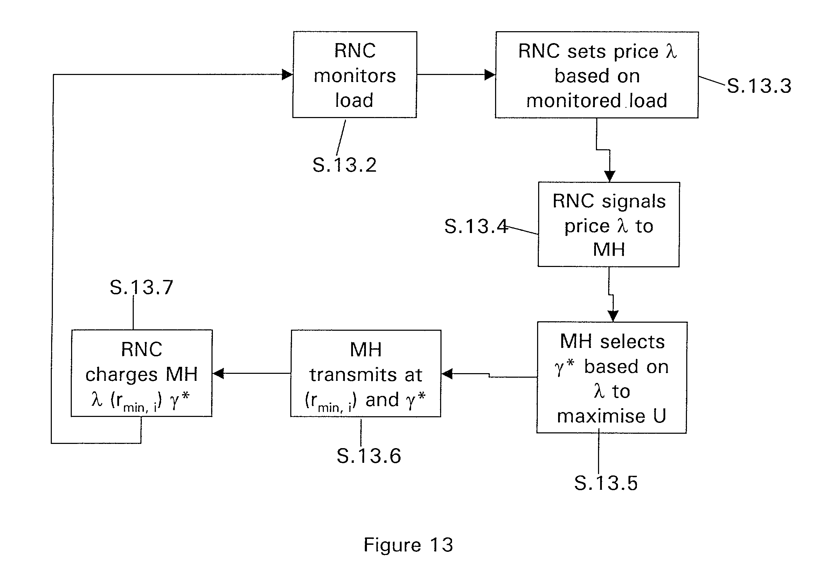

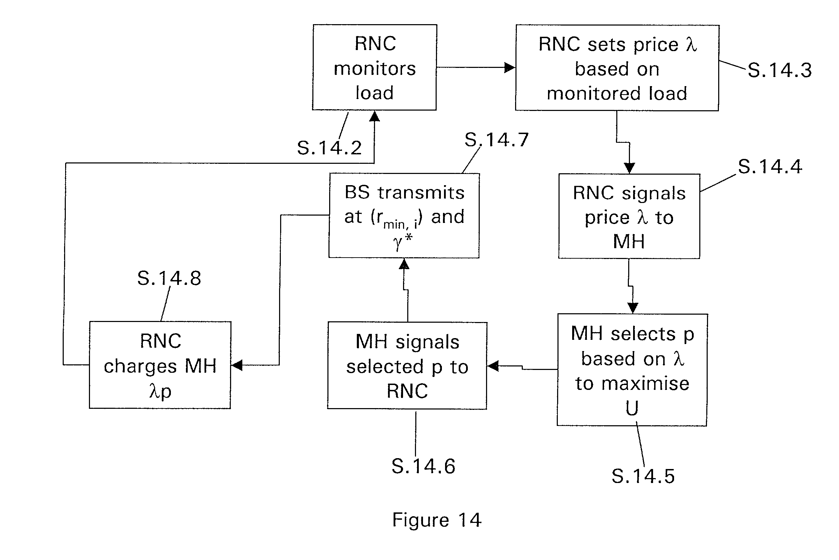

As to the method steps required to perform resource allocation for rate-inelastic traffic within the fourth embodiment, the steps required for the up-link are shown in Figure 13, whereas those for the downlink are shown in Figure 14. The principal difference between this embodiment and the rate-elastic traffic embodiment is that the transmission rate r in the present case is not variable, and hence the user utility values must be maximised by choosing an appropriate transmission energy instead. Therefore, the steps 13.2, 13.3, 13.4 for the uplink can be considered substantially the equivalent of steps 9.2, 9.3, and 9.4 of Figure 9, with the differences that the price lambda is set instead as a function of the fixed rate $r_{\min,i}$ and the signal quality gamma_i. Then, at step 13.5 the mobile selects gamma ^ * using (24), and at step 13.6 transmits at $r_{\min,i}$ and gamma^*. At step 13.7 the BS then charges in accordance with the wireless resource usage $r_{\min,i}$ and gamma^*.

In the downlink, the steps 14.2, 14.3, and 14.4 can be thought of as substantially similar to those of 10.2, 10.3, and 10.4 with the differences that the price lambda is set instead as a function of the transmission power p. At step 14.5 the mobile selects p to maximise (24), and at step 14.6 signals p to the base station. At step 14.7 the base station then transmits at $r_{\min,i}$ and p. At step 14.8 the BS then charges in accordance with the wireless resource usage p.

In a fifth embodiment, we present a further user utility function which can be used for hybrid code/time division scheduling.

WCDMA supports both code division and time division scheduling for packet transmission. Time division scheduling has the advantage of supporting higher transfer rates for the same energy per transmitted bit, compared to code division scheduling, but requires synchronization and has the disadvantage of non-continuous transmission, which results in bursty traffic. Indeed, it can be shown that in a hybrid code and time division scheduling system supporting real-time (delay intolerant) and non real-time (delay tolerant) traffic, both with fixed target $E_b/N_0$, the aggregate transmission rate of non real-time traffic is maximized if it is scheduled so that only one non real-time source sends traffic in each time slot. Unlike time division multiplexing, code division scheduling supports continuous data transmission, but has the disadvantage of lower instantaneous bit rates.

Shared channels and the common packet channel (used in the uplink) in WCDMA typically use both time division and code division multiplexing. In the downlink, orthogonal codes are shared between many users in a time division manner, i.e., there may be many common packet channels per cell, each having a different bit rate and shared amongst many users in a time division manner. On the other hand, dedicated channels typically use code division scheduling, hence in the downlink an orthogonal code is consumed for each user of a dedicated channel. Indeed, for dedicated channels the bit rate can change during transmission, but remains constant within a single frame that has a minimum duration of 10 ms, and the orthogonal code must be allocated according to the highest bit rate. Nevertheless, the standards specifications for WCDMA do not preclude using time division scheduling for dedicated channels.

In the fifth embodiment we provide a method which exploits the tradeoffs between code division and time division multiplexing solely in terms of the net utility maximization problem.

First, observe that for hybrid code and time division multiplexing, the constraint on resource usage in the uplink becomes

$$\Sigma \alpha_i \varsigma_i < 1$$

where $\alpha_i = \dfrac{r_i \gamma_i}{W + r_i \gamma_i}$ is the resource usage for the uplink in pure code division multiplexing systems, and zeta_i is the percentage of time slots in which user i sends traffic.

Next, we present a utility model for elastic users which value, in addition to the average throughput, whether they can continuously transmit data. For the latter, we consider the expression

$$U_{cont,i}(\varsigma_i)$$

where zeta_i is percentage of time slots in which user i sends data.

The overall utility for a user that values both the average throughput and how continuous his transmission is, can be taken to be

$$U_i(r_i P_{s,i}(\gamma_i)) + U_{cont,i}(\varsigma_i)$$

hence the user's net utility maximization problem is:

$$\text{maximise } U_i(r_iP_{s,i}(\gamma_i))+U_{cont,i}(\zeta_i)-\lambda\alpha_i\zeta_i \qquad (26)$$

over r_i = >0, gamma_i = >0, and zeta_i = > 0. Taking the partial derivatives, with respect to r, gamma, zeta, of the objective function in (26) and equating them with zero it is possible to show that once again the optimal value of gamma can be found from (17) in the same manner as previously described for the first embodiment, and that:

$$U'_{cont,i}(\zeta^*_i)=\lambda\frac{(r_i\gamma_i)^2}{(W + r_i\gamma_i)^2} \qquad (27)$$

If U'cont,i(zeta) is increasing and strictly concave, then from (27) we have that a smaller congestion price lambda results in a larger zeta^*_i . Moreover, for a larger number of mobile users, the optimal value zeta^*_i is larger. Indeed, if we had assumed alpha_i ≈ (r_i *gamma_i) / W , which becomes accurate when there is a large number of mobile users, then U'cont,i(zeta_i) approx 0 ,hence the value of zeta_i would be selected so as to maximize the utility Ucont,i(zeta_i).

Within the fifth embodiment the actual procedure for performing wireless resource control for hybrid code/time division scheduling is substantially the same as for the first embodiment, with the differences that the utility function (26) is used as the utility function by the mobile handset, and the RNC announces the price lambda as a function of alpha_i and zeta_i. As the optimal value of gamma can still be found from (17), and the optimal value of zeta from (27), the problem is reduced to finding the maximum value of (26) with respect to r_i, as in the other embodiments. That is, within the fifth embodiment the handset finds r_i which maximises (26), and then either uses it as its transmission rate for the uplink, or transmits the found value to the network for use in the downlink.

Congestion Control Signalling

We will turn now to a discussion of how the prices of wireless resources can be communicated to end users in a seamless manner, using appropriate marking of explicit congestion notification bits to which the present invention specifically relates.

To achieve seamless wireless/wireline congestion control, the feedback sent to end-systems must include the congestion charge for both wireline and wireless network resources. As already mentioned in the introduction, in fixed wireline networks, Explicit Congestion Notification (ECN) marking will become the standard mechanism for conveying congestion information to end-systems. For this reason according to the present invention we propose to use ECN marking as the signalling mechanism to provide congestion feedback for wireless resources, thereby allowing for seamless resource control between fixed and wireless networks.

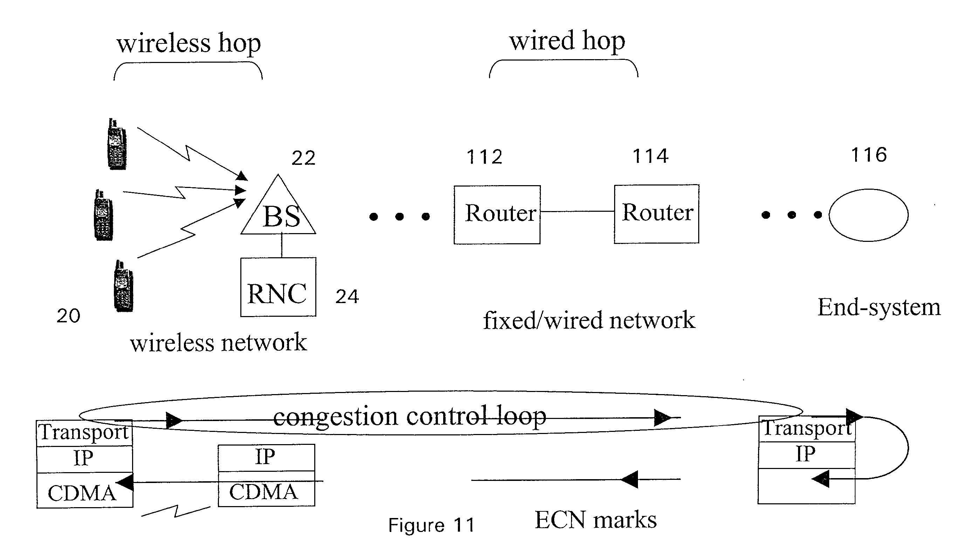

Our approach involves performing ECN marking at the RNC,based on the level of congestion of wireless resources and the resource usage of each mobile. With such an approach, in the case of uplink data transmission, the ECN marks returned to the mobile will include congestion feedback for both wireline and wireless network resources, as shown in Figure 11.

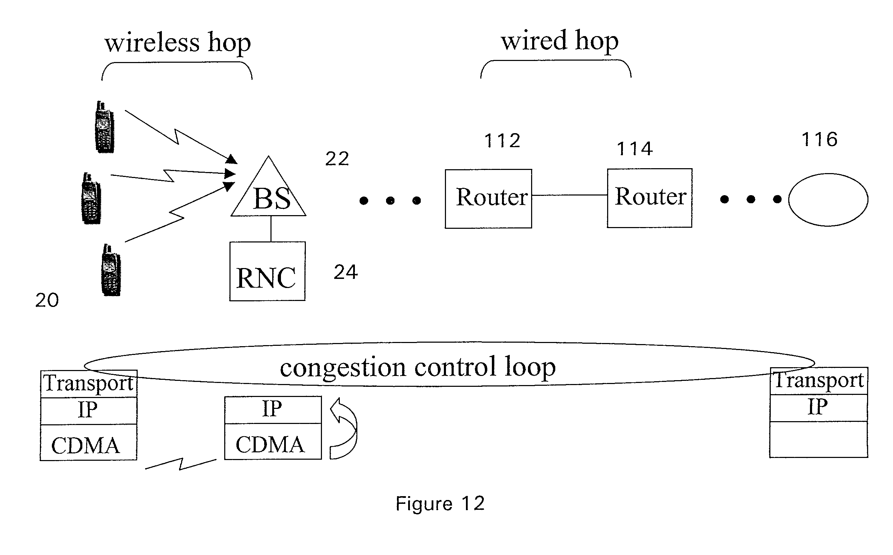

The RNC performs ECN marking based on the level of congestion and the usage of wireless network resources. To perform this functionality, the RNC needs information regarding the load and the target signal quality; such information is available at the CDMA layer, and the corresponding measurements are performed at the base station, as illustrated by the control loop in Figure 12.

i The RNC is an appropriate location to perform ECN marking, since it is responsible for managing radio resources, and performs admission control and transmission scheduling. Of course, the approach requires that the RNC has IP layer functionality, which is the case in the 3GPP2 (3rd Generation Partnership Project 2) radio access network architecture. If the RNC does not contain an IP layer that peers with the IP layer at the mobile host and the IP layer at the first router in the data network, then some additional functionality is required in the device where such an IP layer exists.

In a GPRS (Generic Packet Radio Service)-based core network, this IP layer exists in the gateway GPRS support node (GGSN)

Next we discuss in detail how ECN marking should be performed for the uplink and the downlink, in order to reflect the level of congestion and the resource usage of each mobile. Important differences between the two is in the resource constraint, hence how the load is measured, and that in the uplink there is no shared buffer, whereas in the downlink the RNC can contain a shared buffer.

ECN Marking for the uplink

Recall that in the uplink, and when there is a large number of mobile users, resource usage for a mobile i is determined by the product of the transmission rate $r_i$ and the signal quality, expressed in terms of the target bit-energy-to-noise-density ratio gamma_i. Since the rate of successful packet transmission is $r_i$ Ps,i( gamma_i), in order to achieve a feedback rate that is proportional to $r_i$ gamma_i, the marking probability needs to be proportional to gamma_i /Ps,i(gamma_i); note that this quantity is used during outer loop power control at the RNC, since the optimal gamma_i is determined from (17) and needs to be made known to the IP layer, where marking is performed. Moreover, since the marking probability is different for different mobiles, the RNC needs to able to associate IP addresses with the mobile identifiers used at the CDMA layer.

In addition to the amount of resources used by each mobile, the marking probability should reflect the level of congestion. In the uplink of a CDMA network there are no shared buffers, hence a queue-dependent marking scheme, such as RED (Random Early Detection), can not be applied. Moreover, because there is no shared buffer, direct application of the virtual queue marking scheme results in a threshold marking algorithm, where packets are marked whenever the rate, measured over some time interval, is above a threshold; such a scheme would produce in bursts of marks, which typically result in lower throughput.

In order to achieve a smoother feedback, we can have the marking probability depend on a function that increases smoothly as the load increases. (The threshold marking scheme corresponds to a step-wise function.) Possible functions of the form P(rho) : [0,1] $\rightarrow$ [0,1] , where rho is the total load, include the following:

$$\frac{1 - e^{\rho}}{1 - e} ;$$

or

$$\frac{1 - \chi^{\rho}}{1 - \chi} ;$$

or

$$\{0 \text{ if rho} < = \text{rho\_0} \}$$

$$\{a*\text{rho if rho} > \text{rho\_0} \}$$

The first function has no parameters to tune. The second, which is a generalization of the first, has one parameter, chi, that controls the degree of convexity of the marking probability curve. Finally, the third has two parameters: rho_0,a .

In the embodiments, let $Q_i$= gamma_i/Ps(gamma_i) and Qmax= max_i{$Q_i$}. Based on the above discussion on resource usage and the level of congestion, the marking probability M_i for mobile i for the uplink should be given by:

$$M_i = \frac{Q_i}{Q_{max}} P(\rho)$$

The reason for dividing with Qmax is because the marking probability should be less than 1.

Since by definition P(rho) < = 1 , dividing with Q_{max} ensures that the marking probability for all mobiles is less than 1.

In the embodiments the radio network controller applies the above equation to set the ECN bit or bits of a proportion of packets in each data stream to each mobile user to communicate the uplink congestion charges.

Note that for a bufferless link in a fixed wireline network, the marking probability would simply be P(rho); this is the case because in fixed networks resource usage for a stream is given by its average rate, hence the marking probability is the same for all streams.

ECN Marking for the downlink

Unlike the uplink, in the downlink there can be a shared buffer located at the RNC. Hence, queue-dependent marking algorithms, such as RED and virtual queue marking, are possible. An issue regarding the latter is that in the downlink there is no fixed maximum transmission rate; rather, the transmission rate depends, in addition to the maximum transmission power, on the path gains, the target signal qualities, and the interference for all mobile users. Nevertheless, an estimate of the maximum transmission rate $r^{\wedge}$ can be found based on average values for the path gain, target $E\_b/N\_0$, orthogonality, noise. Alternatively, a more adaptive scheme can consider measuring the current transmission rate $r\_i$ and corresponding power $p$. These measurements can be averages over fixed time intervals or estimates using exponential weighted averaging. From these measurements an estimate of the maximum transmission rate can be found using

$$r^{\wedge} = r_i \frac{P}{P}$$

where $P$ is the maximum transmission power from the base station. Note that the last equation estimates the maximum transmission rate assuming that the distribution of traffic to the various mobiles remains the same.

Given the estimate on the maximum transmission rate $r^{\wedge}$, the virtual queue can be defined to have rate theta*$r^{\wedge}$ and buffer theta*$b$, where $b$ is the size of the shared buffer and theta< 1 is the virtual queue factor.

In the downlink, resource usage is determined by the transmitted power. Hence, the marking probability should be proportional to $p/r\_i$, where $p$ and $r\_i$ are the average power and rate for user i ; these can be measured in fixed time intervals, or estimated using exponential weighted averaging.

Let $S\_i= p/r\_i$ and Smax= $\max\_i\{S\_i\}$. To account for both the level of congestion and resource usage, the marking probability for mobile i for the downlink is given by

$$M_i = \frac{S_i}{S_{max}} P(\rho)$$

where the function P( rho) : $[0,1] \rightarrow [0,1]$ is determined by the virtual queue algorithm, or any other similar algorithm. For a link in a fixed wireline network, the marking probability would simply be P(rho) . As in the uplink, the reason for dividing with Smax is to have a marking probability less than 1 for all mobiles.

Note that some percentage of packets, hence ECN marks, will be lost as they are sent from the base station to the mobile. Hence, the rate of ECN marks the mobile observes will be less than the rate which depicts the actual congestion charge in the wireless and wireline networks.Indeed, if the packet success probability is omega_i=Ps,i (gamma_i) , then the rate of marks will be omega_i*x_i , where x_i is the rate of marks leaving the base station.

The congestion control algorithm at the mobile will determine how lost or corrupted packets are interpreted. Nevertheless, to retrieve the actual rate of marks, the mobile can assume that for each ECN mark received there is an additional mark with probability (1/omega_i-1).

Hence, the rate of these additional marks will be:

$$\left( \frac{1}{\omega_i} - 1 \right) \omega_i x_i = \left( 1 - \omega_i \right) x_i$$

which added to the rate of marks in successfully received packets omega_i*x_i results in an average mark rate equal to x_i.

The approach described above requires that the TCP/IP stack be aware that they are running over a wireless network.

An alternative approach, which reduces the complexity at the mobile host and enables the same congestion control algorithm to run in both a mobile and a fixed host, is for the RNC to add, for every marks its sees, an *additional* mark with probability (1/omega_i - 1) ; assuming that the marking probability is small, hence we don't end up marking already marked packets, the rate of marks leaving the RNC becomes x_i/ omega_i , hence the rate of marks that successfully reach mobile i is x_i. The congestion control algorithm at the mobile can now simply ignore corrupted packets, and assume that the presence of congestion is indicated solely with the receipt of an ECN mark.

**Claims**

1. A method of congestion control signalling for use in a wireless network, the method comprising the steps of: transmitting data packets to one or more user terminal over a wireless communications link; and setting one or more explicit congestion notification (ECN) bits in a sub-set of the transmitted packets prior to transmission;
   wherein the proportion of transmitted packets whose ECN bit or bits is set is indicative of a congestion charge to be made for use by the or each user terminal of one or more wireless resources.

2. A method according to claim 1, wherein the setting step further comprises the steps of monitoring the data traffic load in the wireless network; and selecting an ECN setting probability as a function of the monitored data traffic load; wherein the function is arranged such that the ECN setting probability increases as the monitored data traffic load increases.

3. A method according to claim 2, wherein a first function is used to select the ECN setting probability for ECN bits which indicate the congestion charge for use of the one or more wireless resources for the transmission of data from the one or more user terminals, and a second function is used to select the ECN setting probability for ECN bits which indicate the congestion charge for use of the one or more wireless resources for the transmission of data to the one or more user terminals.

4. A method according to claim 3, wherein the wireless network is a CDMA network, and the first function is a function of at least the monitored data traffic load on the network, and a transmission bit-energy to noise spectral density ratio of the data transmitted from the one or more user terminals.

5. A method according to claims 3 or 4, wherein the wireless network is a CDMA network, and the second function is a function of at least the monitored data traffic load on the network, and a transmission power value of the data transmitted to the one or more user terminals.

6. A method according to any of the preceding claims, wherein the setting of a packet's ECN bit or bits is performed by a radio network controller (RNC) provided to control the wireless network.

7. A method according to any of the preceding claims, wherein the wireless resources comprise any one or more of a transmission rate; a transmission bit-energy to noise spectral density ratio; transmission power; user terminal battery power; and/or one or more time periods in which a user may transmit.

8. A wireless network comprising one or more base stations operable to communicate with one or more user terminals via one or more radio communications links and a radio network controller arranged to control said base stations and being further operable to perform the method of any of claims 1 to 7.

9. A computer-readable storage medium storing a program which when run on a computer controls the computer to perform the method of any of claims 1 to 7.

Figure 1

$p_i$

$r_i$

$g_i p_i$

22

BS

RNC — 24

RNC: Radio Network Controller

(a)

20

$g_i p_i$

$p_i$

$r_i$

22

BS

RNC — 24

RNC: Radio Network Controller

(b)

Figure 2

EP 1 317 151 A1

no minimum rate

(a)

with minimum rate

(b)

Figure 3

$$P_s\left(\gamma^*\right) = P_s'\left(\gamma^*\right) \cdot \gamma^*$$

Figure 4

Figure 6

Figure 5

$$\lambda$$

$$L = \sum r_i \gamma_i \qquad W$$

Figure 7

BS

RNC

$$r_i$$

feedback (charge)

Figure 8

S.9.1 — RNC selects optimal $\gamma^*$

S.9.2 — RNC monitors load

S.9.3 — RNC sets price $\lambda$ based on monitored load

S.9.4 — RNC signals price $\lambda$ to MH

S.9.5 — MH selects $r^*$ based on $\lambda$ to maximise U

S.9.6 — MH transmits at $r^*$ and $\gamma^*$

S.9.7 — RNC charges MH $\lambda r^* \gamma^*$

Figure 9

Figure 10

wireless hop

wired hop

22

112                    114                    116

BS

Router —— Router

RNC    24

20

wireless network

fixed/wired network

End-system

EP 1 317 151 A1

Transport                                                    Transport
IP                                                                   IP
CDMA          IP                                              IP
                  CDMA

congestion control loop

Figure 11        ECN marks

Figure 12

RNC
monitors
load

S.13.2

RNC sets price λ
based on
monitored load

S.13.3

RNC signals
price λ to
MH

S.13.4

MH selects
γ* based on
λ to
maximise U

S.13.5

MH
transmits at
(r$_{min, i}$) and γ*

S.13.6

RNC
charges MH
λ (r$_{min, i}$) γ*

S.13.7

Figure 13

Figure 14

**European Patent Office**

## EUROPEAN SEARCH REPORT

Application Number

EP 01 31 0035

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | PEIJUAN LIU ET AL: "Forward-link CDMA resource allocation based on pricing" 2000 IEEE WIRELESS COMMUNICATIONS AND NETWORKING CONFERENCE. CONFERENCE RECORD (CAT. NO.00TH8540), PROCEEDINGS OF IEEE CONFERENCE ON WIRELESS COMMUNICATIONS AND NETWORKING, CHICAGO, IL, USA, 23-28 SEPT. 2000, pages 1410-1414 vol.3, XP002199752 2000, Piscataway, NJ, USA, IEEE, USA ISBN: 0-7803-6596-8 | 8,9 | H04Q7/22 H04L12/56 H04L12/28 |
| A | * paragraphs '0001!-'0003!,'0006! * | 1-7 | |
| A | DE 199 42 947 A (SIEMENS AG) 22 March 2001 (2001-03-22) * column 2, line 28 - column 3, line 65 * | 1 | |
| D,A | KELLY F: "CHARGING AND RATE CONTROL FOR ELASTIC TRAFFIC" EUROPEAN TRANSACTIONS ON TELECOMMUNICATIONS, EUREL PUBLICATION, MILANO, IT, vol. 8, no. 1, 1997, pages 33-37, XP000643099 ISSN: 1124-318X * paragraph '0001! * | 1 | |
| | | | **TECHNICAL FIELDS SEARCHED (Int.Cl.7)** H04Q H04L |
| | -/-- | | |

The present search report has been drawn up for all claims

| Place of search | Date of completion of the search | Examiner |
|---|---|---|
| THE HAGUE | 23 May 2002 | Kokkoraki, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 31 0035

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | RAMANI R ET AL: "Explicit congestion notification (ECN) in TCP over wireless network" 2000 IEEE INTERNATIONAL CONFERENCE ON PERSONAL WIRELESS COMMUNICATIONS. CONFERENCE PROCEEDINGS (CAT. NO.00TH8488), PROCEEDINGS OF IEEE INTERNATIONAL CONFERENCE ON PERSONAL WIRELESS COMMUNICATIONS (ICPWC), HYDERABAD, INDIA, 17-20 DEC. 2000, pages 495-499, XP002199753 2000, Piscataway, NJ, USA, IEEE, USA ISBN: 0-7803-5893-7 * paragraphs '0001!,'02.3! * | 1 | |
| A | SEUNGCHEON KIM ET AL: "Congestion control for best-effort services in wireless access network" JOINT 4TH IEEE INTERNATIONAL CONFERENCE ON ATM(ICATM'01) AND HIGH SPEED INTELLIGENT INTERNET SYMPOSIUM. ICATM 2001 (CAT. NO.00EX486), JOINT 4TH IEEE INTERNATIONAL CONFERENCE ON ATM (ICATM'01) AND HIGH SPEED INTELLIGENT INTERNET SYMPOSIUM. ICATM 2001,, pages 217-221, XP002199754 2001, Piscataway, NJ, USA, IEEE, USA ISBN: 0-7803-7093-7 * paragraph '0003! * | 1 | TECHNICAL FIELDS SEARCHED (Int.Cl.7) |

The present search report has been drawn up for all claims

| Place of search | Date of completion of the search | Examiner |
|---|---|---|
| THE HAGUE | 23 May 2002 | Kokkoraki, A |

EPO FORM 1503 03.82 (P04C01)

## ANNEX TO THE EUROPEAN SEARCH REPORT
## ON EUROPEAN PATENT APPLICATION NO.

EP 01 31 0035

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2002

| Patent document cited in search report | | Publication date | Patent family member(s) | | Publication date |
|---|---|---|---|---|---|
| DE 19942947 | A | 22-03-2001 | DE | 19942947 A1 | 22-03-2001 |
| | | | WO | 0119021 A2 | 15-03-2001 |

EPO FORM P0459

For more details about this annex : see Official Journal of the European Patent Office, No. 12/82